# EUROPÄISCHE PATENTSCHRIFT

(11) **EP 1 584 641 B1**
(45) Veröffentlichungstag und Bekanntmachung des Hinweises auf die Patenterteilung: **25.07.2012**
(21) Anmeldenummer: 05006942.6
(22) Anmeldetag: 30.03.2005
(51) Int. Cl.: C08J 3/03, C08G 18/08

(54) **Verfahren zur kontinuierlichen Herstellung einer wässrigen Polyurethandispersion**
Process for the continuous preparation of an aqueous polyurethane dispersion
Procédé pour la préparation en continu d'une dispersion aqueuse de polyuréthane

(30) Priorität: 08.04.2004 DE 102004017436
(43) Veröffentlichungstag der Anmeldung: 12.10.2005
(73) Patentinhaber: Bayer MaterialScience AG, 51368 Leverkusen (DE)
(72) Erfinder: Gertzmann, Rolf, Dr., 51377 Leverkusen (DE); Klinksiek, Bernd, 51429 Bergisch-Gladbach (DE); Obendorf, Lars, Dr., 51065 Köln (DE); Irle, Christoph, Dr., 8960 Sant Just Desvern Barcelona (ES)

(56) Entgegenhaltungen:
- EP-A- 0 805 171
- EP-A1- 0 540 985
- EP-A1- 0 685 544
- EP-A2- 0 407 968
- US-A1- 2002 165 314
- ANONYMOUS: "The use of in-line mixers in the preparation of aqueous polyurethanes and urethane/acrylic hybrids", RESEARCH DISCLOSURE, MASON PUBLICATIONS, HAMPSHIRE, GB, vol. 457, no. 113, 1 May 2002 (2002-05-01) , XP007130417, ISSN: 0374-4353

## Beschreibung

Die Erfindung betrifft ein Verfahren zur kontinuierlichen Herstellung wässriger Polyurethandispersionen auf der Basis aliphatischer und/oder aromatischer Polyisocyanate.

Aus dem Stand der Technik sind zur großtechnischen Herstellung wässriger Polyurethandispersionen im wesentlichen zwei Batch-Prozesse bekannt: der Acetonprozess und das Präpolymer-Mischverfahren. Die Herstellung von Dispersionen auf Basis aliphatischer Polyisocyanate gelingt auf Grund der moderaten Reaktivität der aliphatischen Polyisocyanate mit beiden Prozessen vergleichsweise einfach. Die Herstellung von Dispersionen auf Basis aromatischer Polyisocyanate erfolgt in der Regel nach dem Acetonprozess oder dem Ketiminverfahren, da beide Prozesse eine übermäßige Schaumbildung im Dispergierschritt, hervorgerufen durch die Isocyanat-Wasser-Reaktion, verhindern. In WO 81/02894 wird ein weiterer Weg beschritten, um Dispersionen auf Basis von aromatischen Polyisocyanaten (PIC) zu erhalten. Die reaktiven PIC-Gruppen werden mit einem wieder abspaltbaren Blockierungsmittel umgesetzt, so dass die Schaumbildung nicht bzw. nur in untergeordnetem Maße stattfindet. Nachteilig an diesem Verfahren ist - wie auch beim Ketiminverfahren - zum einen der zusätzliche Blockierungsschritt sowie das im System verbleibende oder zusätzlich zu entfernende niedermolekulare Blockierungsmittel.

In EP-A 0 220 000 wird die Herstellung von aromatischen Dispersionen nach dem Präpolymer-Mischverfahren beschrieben. Allerdings zeigen die Beispiele, dass stets ein externer Emulgator im Herstellprozeß benötigt wird, der später in den Beschichtungen, welche aus den Dispersionen hergestellt werden, zurück bleibt und die dem Fachmann bekannten Nachteile mit sich bringt. Zudem erfolgt die Neutralisation des Präpoylmers indirekt, d.h. das zur Neutralisation der Carboxylgruppen notwendige tert. Amin wird der Wasservorlage zugeschlagen. Eine direkte Neutralisation führt hier zu einem starken NCO-Abfall des Präpolymers, weit unter den theoretischen NCO-Gehalt. Darüber hinaus ist der Austausch des als Kettenverlängerungsamin verwendeten Hydrazins gegen andere, gegenüber Isocyanaten reaktive Amine kaum möglich. Schließlich besitzen die nach der EP-A 0 220 000 erhaltenen Dispersionen nur einen Feststoffgehalt von 30 Gew.%.

Zur kontinuierlichen Herstellung von wässrigen Polyurethandispersionen ist beispielsweise aus WO 98/41552 ein Verfahren bekannt. Bei diesem Verfahren werden mit Hilfe mechanisch angetriebener, und somit störanfälliger, Dispergatoren und in der Regel durch Zusatz externer Emulgatoren Dispersionen hergestellt.

EP-A 0 303 907 beschreibt ebenfalls ein kontinuierliches Verfahren, bei dem wässrige Polyurethandispersionen hergestellt werden. Das bevorzugte Verfahren sieht die Dosierung von Wasser mit hoher Geschwindigkeit in das höher viskose Präpolymer vor, wobei das inhomogene Gemisch in einem Mischrohr homogenisiert bzw. das (Prä-)Polymer dispergiert wird. Nachteil dieses an sich sehr vorteilhaften Verfahrens ist die sich zunehmend verschlechternde Standzeit des Systems bei der Verarbeitung hochviskoser Präpolymere.

EP0805171 A1 betrifft ein Verfahren zur Herstellung einer wässrigen polyurethandispersion, in dem, als Vorläufer-Schritt, die hydrophil modifizierte Polyol- und polyisocyanatkomponente unter intensivem Rühven eingemischt werden, und danach in einem Strahldispergator unter erhöhtem Druck feindispergiert.

Aufgabe der vorliegenden Erfindung ist es, ein Verfahren zur kontinuierlichen Herstellung von wässrigen aliphatischen und aromatischen Polyurethandispersionen bereitzustellen, das die genannten Nachteile nicht aufweist. Das Verfahren soll es insbesondere ermöglichen, auch Polyurethandispersionen auf Basis von aromatischen Polyisocyanaten herzustellen sowie hochviskose Präpolymere zu verarbeiten. Das Verfahren soll sich ferner durch eine hohe Standzeit in der Größenordnung von 10 Stunden und mehr auszeichnen.

Gegenstand der Erfindung ist ein Verfahren zur kontinuierlichen Herstellung einer wässrigen Polyurethandispersion, auf Basis wenigstens eines aliphatischen und/oder aromatischen Polyisocyanats, gekennzeichnet durch die folgenden Schritte:
a) Herstellung einer wässrigen Voremulsion durch Vermischen eines hydrophile und/oder potenziell hydrophile Gruppen enthaltenden Polyurethanpräpolymers mit Wasser in einer Mischdüse, wobei das Polyurethanpräpolymer in das Wasser eingedüst wird.
b) Bildung einer Emulsion durch Homogenisierung der Voremulsion aus Schritt a) in einer mehrstufigen Homogenisierdüse.

Ausgangsprodukte für das erfindungsgemäße Verfahren zur kontinuierlichen Herstellung wässriger Polyurethandispersionen sind Polyurethanpräpolymere. Die Herstellung lösemittelhaltiger oder lösemittelfreier Polyurethanpräpolymere, wie sie für das erfindungsgemäße Verfahren geeignet sind, erfolgt nach einem aus dem Stand der Technik bekannten Verfahren. Diverse Verfahren sind umfassend im Stand der Technik beschrieben. Beispielhaft sei das in EP-A 0 304 718 beschriebene Verfahren erwähnt. Die Herstellung eines Polyurethanpräpolymers ist jedoch nicht auf das in EP-A 0 304 718 beschriebene Verfahren beschränkt.

Häufig wird zur Herstellung der Präpolymere ein molarer Diisocyanatüberschuss im Reaktor vorgelegt und anschließend mit den aktiven Wasserstoffatome enthaltenden Di- und Polyolen in Gegenwart oder in Abwesenheit von Lösungsmitteln versetzt. In der Polyolmischung, die in der Regel aus höhermolekularen (400 bis 6000 g/mol) und niedermolekularen Di-, Tri- oder Polyolen (62 bis 400 g/mol) besteht, befinden sich auch gegenüber Isocyanatgruppen reaktive Gruppen aufweisende hydrophile ionische und/oder nichtionische und/oder hydrophilierbare Verbindungen. Diese sorgen für die Dispergierbarkeit des Polymers. Die Reaktion wird in der Regel bei Temperaturen von 40 bis 120°C bis zu einem konstanten NCO-Gehalt durchgeführt. Zur Beschleunigung der NCO-OH-Reaktion können auch die in der Polyurethanchemie üblichen Katalysatoren eingesetzt werden. Die Überführung der potenziell hydrophilen Gruppen in hydrophile, die Dispergierbarkeit in Wasser bewirkende Gruppen erfolgt in der Regel durch Zugabe geeigneter Verbindungen (z.B. Basen im Fall von carbonsäurefunktionellen Präpolymeren oder Säuren bzw. Quartärnierung bewirkende Komponenten im Fall von tertiären Aminogruppen enthaltenden Präpolymeren), bevor oder nachdem sich der NCO-Gehalt eingestellt hat.

Die Überführung der hydrophilierbaren Komponente in die hydrophile Form, z.B. mit Hilfe eines Neutralisationsamins, kann sowohl im Reaktionsgefäß für die Herstellung des Präpolymers als auch online während des erfindungsgemäßen kontinuierlichen Verfahrens erfolgen. Erfolgt dieser Schritt online, so kann er entweder vor der Vermischung des Präpolymers mit Wasser oder bei der Herstellung der Voremulsion gemäß Schritt a) des erfindungsgemäßen Verfahrens erfolgen, indem die eine Versalzung hervorrufende Gruppe in ausreichender Menge dem Wasser (auch als Dispergierwasser bezeichnet) zugesetzt wird.

Das Präpolymer wird vorzugsweise vor der Herstellung der wässrigen Voremulsion gemäß Schritt a) mit wenigstens einer, die Versalzung der potenziell ionischen Gruppen hervorrufenden Komponente kontinuierlich in einer Mischdüse umgesetzt.

Nach dem erfindungsgemäßen Verfahren können entweder aliphatische oder aromatische Polyisocyanate oder Mischungen von aliphatischen und aromatischen Polyisocyanaten eingesetzt werden.

Als aliphatische Polyisocyanate werden zur Herstellung des Polyurethanpräpolymers bevorzugt Diisocyanate der Formel R¹(NCO)₂ eingesetzt, wobei R¹ für einen aliphatischen Kohlenwasserstoffrest mit 4 bis 12 Kohlenstoffatomen oder einen cycloaliphatischen Kohlenwasserstoffrest mit 6 bis 15 Kohlenstoffatomen oder einen araliphatischen Kohlenwasserstoffrest mit 7 bis 15 Kohlenstoffatomen steht. Beispiele derartiger bevorzugter Diisocyanate sind Tetramethylendiisocyanat, Hexamethylendiisocyanat, α,α,α',α'-Tetra-methyl-*m*- oder *p*-xylylendiisocyanat; 1-Isocyanato-3,3,5-trimethyl-5-isocyanatomethylcyclohexan (Isophorondiisocyanat) und 4,4'-Diisocyanatodicyclohexylmethan sowie Mischungen der genannten Diisocyanate.

Als aromatische Polyisocyanate werden zur Präpolymerherstellung Diisocyanate der Formel R²(NCO)₂ eingesetzt, wobei R² für einen aromatischen Kohlenwasserstoffrest mit 6 bis 15 Kohlenstoffatomen steht. Beispiele derartiger bevorzugter Diisocyanate sind 4,4'-Diisocyanatodiphenylmethan, 2,4'-Diisocyanatodiphenylmethan, 2,4-Diisocyanatotoluol, 2,6-Diisocyanatotoluol oder Mischungen dieser Diisocyanate.

Als höhermolekulare Polyole mit einem Molekulargewicht von 400 bis 6000 werden die üblicherweise zur Herstellung von Polyurethanen eingesetzten Komponenten verwendet. Sie weisen eine OH-Funktionalität von 1,8 bis 5, bevorzugt von 1,9 bis 3 und besonders bevorzugt von 1,93 bis 2,0 auf. Es handelt sich zum Beispiel um Polyester, Polyether, Polycarbonate, Polyestercarbonate, Polyacetale, Polyolefine, Polyacrylate und Polysiloxane. Bevorzugt werden α,ω-Diole von Polyestern, Polyethern auf der Basis von Propylenoxid oder Tetrahydrofuran, Polyestercarbonaten und Polycarbonaten eingesetzt.

Geeignete kurzkettige Diole und Polyole sind solche mit Molgewichten unter 400. Als Diole kommen die in der Polyurethanchemie üblichen Diole zum Einsatz, wie z.B. Ethylenglykol, 1,2- und 1,3-Propandiol, 1,3- und 1,4-Butandiol, 1,6-Hexandiol, 2-Ethyl-1,3-hexandiol, Diethylenglykol, Dipropylenglykol, Neopentylglykol, 2,4-Dimethylpentandiol, 2-Ethyl-3-propyl-1,5-pentandiol, 2,2,4-Trimethylpentandiol, Cyclohexandimethanol oder Mischungen derartiger Diole. Gegebenenfalls können auch kurzkettige Polyole, wie z.B. Trimethylolpropan, Glycerin, Hexantriol, Pentaerythrit und N,N',N"-Tris-(2-hydroxyethyl)-isocyanurat in solchen Mengen zugesetzt werden, dass das Präpolymer rührbar bleibt.

Geeignete ionische oder potentiell ionische Verbindungen und nichtionische Verbindungen sind solche, die mindestens eine gegenüber NCO-Gruppen reaktive Gruppe aufweisen. Geeignete Verbindungen sind z.B. Mono- und Dihydroxycarbonsäuren, Mono- und Diaminocarbonsäuren, Mono- und Dihydroxysulfonsäuren, Mono- und Diaminosulfonsäuren sowie Mono- und Dihydroxyphosphonsäuren oder Mono- und Diaminophosphonsäuren und ihre Salze wie z.B. Dimethylolpropionsäure oder Dimethylolbutansäure, Hydroxypivalinsäure, N-(2-Aminoethyl)-β-alanin, 2-(2-Amino-ethylamino)-ethansulfonsäure, Ethylendiamin-propyl- oder Ethylendiaminbutylsulfonsäure, 1,2- oder 1,3-Propylendiamin-β-ethylsulfonsäure, Lysin oder 3,5-Diaminobenzoesäure. Ebenfalls geeignet sind das Hydrophilierungsmittel gemäß Beispiel 1 aus der EP-A 0 916 647 und dessen Alkali- und/oder Ammoniumsalze, das Addukt von Natriumbisulfit an Buten-2-diol-1,4, Polyethersulfonat, das propoxylierte Addukt aus 2-Butendiol und NaHSO₃ (z.B. in der DE-A 24 46 440, Seite 5-9, Formel I-III) sowie in kationische Gruppen überführbare Bausteine wie N-Methyl-diethanolamin.

Nichtionisch hydrophile Verbindungen, z.B. Polyoxyalkylenether mit mindestens einer Hydroxy- oder Aminogruppe, können anteilig oder allein als Hydrophilierungskomponente eingesetzt werden. Diese Polyether enthalten einen Anteil von 30 Gew.-% bis 100 Gew.-% an Bausteinen, die vom Ethylenoxid abgeleitet sind.

Präpolymere, welche potenziell ionische Gruppen aufweisen, werden vor der Herstellung der Voremulsion gemäß Schritt a) durch die Umsetzung mit einer geeigneten Komponente in die ionische Form überführt. Präpolymere mit Carbonsäure- oder Sulfonsäuregruppen werden durch Zugabe von basischen Verbindungen in ionische, wässerlösliche Gruppen überführt. Aminogruppen werden durch Protonierung/Quartärnisierung in ionische, wasserlösliche Gruppen überführt. Weist das Präpolymer eine ausreichende Menge Polyethylenoxidketten oder Sulfonatgruppen auf, so kann ggf., falls keine Mischhydrophilierung mit o.g. Komponenten vorliegt, ein ohne weitere Zusätze dispergierbares Harz entstehen.

Die Neutralisierung der sauren Gruppen erfolgt mit gegenüber Isocyanatgruppen inerten tertiären Aminen, die bei der späteren Aushärtung den Film ganz oder teilweise verlassen können. Beispiele für solche Verbindungen sind Ammoniak, Ammoniumcarbonat oder -hydrogencarbonat, Trimethylamin, Triethylamin, Tributylamin, Diisopropylethylamin. Weniger bevorzugt können auch solche, gegenüber Isocyanaten reaktive Gruppen enthaltende Amine wie z.B. Dimethylethanolamin, Diethylethanolamin, Triethanolamin eingesetzt werden, die den Film bei Anbindung an die Polymermatrix nicht mehr verlassen. Darüber hinaus kommen weniger bevorzugt auch Alkali- und Erdalkalihydroxide oder entsprechende Carbonate in Frage.

Im Falle kationischer Gruppen werden Schwefelsäuredimethylester, Phosphorsäure oder Bernsteinsäure eingesetzt. Darüber hinaus können auch Quartärnierungsmittel wie z.B. 1,4 Dichlorbuten eingesetzt werden. Die Überführung der pot. Ionischen Gruppen in die ionische Form wird vorzugsweise in einer Mischdüse durchgeführt, kann aber bei NCO-Präpolymeren auf Basis aliphatischer Polyisocyanate auch im Bulk erfolgen.

Die Herstellung der wässrigen Voremulsion gemäß Schritt a) erfolgt in einer Mischdüse. Als Mischdüsen lassen sich beispielsweise Glattstrahldüsen, Spaltdüsen, Ringspaltdüsen, Ringschlitzdüsen, Lochdüsen oder Gegenstrahldüsen verwenden. Bevorzugt wird eine Mischdüse verwendet, die analog der Voremulgierung in dem aus DE 195 10 651 A bekannten Strahldispergator funktioniert. Gegebenenfalls wird die Zuleitung des Präpolymers temperiert.

Die Herstellung der Voremulsion gemäß Schritt a) mittels einer Mischdüse erfolgt bei einer Druckdifferenz von 0,1 bis 100 bar, vorzugsweise von 0,2 bis 50 bar, besonders bevorzugt von 0,5 bis 20 bar.

Für die Herstellung der wässrigen Voremulsion gemäß Schritt a) wird so viel Wasser zugeben, dass eine Öl in Wasser Emulsion entsteht. Vorzugsweise beträgt das Verhältnis von Polyurethanpräpolymer zu Wasser 70 : 30 bis 20 : 80 Gewichtsteile, bevorzugt 66 : 34 bis 30 : 70 Gewichtsteile und besonders bevorzugt 50 : 50 bis 35 : 65 Gewichtsteile.

Erfindungsgemäß wird gemäß Schritt a) das Polyurethanpräpolymer in das Wasser eingedüst. Dies hat den Vorteil erhöhter Standzeiten im Vergleich zu der umgekehrten Verfahrensweise, in der das Wasser in das Polyurethanpräpolymer eingedüst wird.

In einer bevorzugten Ausführungsform des Verfahrens beträgt die Temperatur des Präpolymers 10°C bis 100°C, bevorzugt 15°C bis 80°C und besonders bevorzugt 20°C bis 70°C. Die Temperatur des Dispergierwassers beträgt 5°C bis 95°C, bevorzugt 10°C bis 85°C und besonders bevorzugt 20°C bis 60°C. Aus der Verarbeitungstemperatur des Präpolymers ergibt sich die Viskosität des Harzes, die 500 bis 100.000 mPa·s, bevorzugt 1.000 bis 70.000 mPa·s und besonders bevorzugt 2.000 bis 40.000 mPa·s liegt.

Gemäß Schritt b) des erfindungsgemäßen Verfahrens wird durch Homogenisierung der Voremulsion aus a) eine Emulsion hergestellt. Die Homogenisierung wird in einer mehrstufigen Homogenisierdüse durchgeführt. Vorzugsweise werden 2 bis 20 Stufen eingesetzt, besonders bevorzugt 3 bis 15 Stufen. Als Homogenisierdüsen lassen sich beispielsweise Flachdüsen, Zackendüsen, Messerkantendüsen oder Gegenstrahldispergatoren verwenden. Bevorzugt wird als Homogenisierdüse ein Strahldispergator verwendet. Als Strahldispergator kann beispielsweise der aus DE 195 10 651 A bekannte Strahldispergator verwendet werden.

Die Herstellung der Emulsion aus der Voremulsion durch Homogenisierung gemäß Schritt b) mittels einer mehrstufigen Homogenisierdüse erfolgt bei einer Druckdifferenz von 1 bis 200 bar, vorzugsweise von 3 bis 100 bar, besonders bevorzugt von 5 bis 60 bar, wobei sich die Druckdifferenz auf die Gesamtheit aller Stufen der mehrstufigen Homogenisierdüse bezieht.

In einer bevorzugten Ausführungsform des erfindungsgemäßen Verfahrens wird in einem weiteren Schritt c) die gemäß b) hergestellte, NCO-Gruppen enthaltende Emulsion wenigstens teilweise mit wenigstens einem gegenüber Isocyanatgruppen reaktiven Amin umgesetzt. Dabei wird die Aminmenge so bemessen, dass sich ein Kettenverlängerungsgrad von 40 bis 125 %, bevorzugt 50 bis 100% und besonders bevorzugt 60 bis 90% ergibt. Geeignete Amine hierfür sind: mono-,di-, tri-, und/oder tetra-aminofunktionelle Substanzen sowie Aminoalkohole des Molekulargewichtsbereichs bis 400, wie z.B. Ethylendiamin, 1,2- und 1,3-Diaminopropan, 1,3-, 1,4- und 1,6-Diaminohexan, 1,3-Diamino-2,2-dimethylpropan, 1-Amino-3,3,5-trimethyl-5-aminoethyl-cyclohexan (IPDA), 4,4' -Diaminodicyclohexylmethan, 2,4- und 2,6-Diamino-1-methyl-cyclohexan, 4,4'-Diamino-3,3'-dimethyl-dicyclohexylmethan, 1,4-Bis-(2-amino-prop-2-yl)-cyclohexan, Polyamine wie Ethylendiamin, 1,2- und 1,3-Diaminopropan, 1,4-Diaminobutan, 1,6-Diaminohexan, Isophorondiamin, Isomerengemisch von 2,2,4- und 2,4,4-Trimethylhexamethylendiamin, 2-Methyl-pentamethylendiamin, Diethylen-triamin, 1,3- und 1,4-Xylylendiamin, α,α,α',α'-Tetramethyl-1,3- und -1,4-xylylendiamin und 4,4-Diaminodicyclohexylmethan, Aminoethanol, Diethanolamin oder Gemische dieser Verbindungen. Als Diamine im Sinne der Erfindung sind auch Hydrazin, Hydrazinhydrat und substituierte Hydrazine geeignet, wie z.B. N-Methylhydrazin, N,N'-Dimethylhydrazin und deren Homologe sowie Säuredihydrazide der Adipinsäure, β-Methyladipinsäure, Sebacinsäure, Hydracrylsäure und Terephthalsäure, Semicarbazido-alkylenhydrazide, wie z.B. β-Semicarbazidopropionsäurehydrazid (z.B. DE-A 17 70 591), Semicarbazidoalkylen-carbazinester, wie z.B. 2-Semicarbazidoethylcarbazinester (z.B. DE-A 19 18 504) oder auch Aminosemicarbazid-Verbindungen, wie z.B. β-Aminoethylsemicarbazido-carbonat (z.B. DE-A 19 02 931). Die anteilige Verwendung monofunktioneller Amine, die keine weiteren, gegenüber NCO-Gruppen reaktiven Gruppen aufweisen, wie z.B. Butylamin und höhere Homologe, ist ebenfalls möglich.

In einer weiteren Ausführungsform kann aber auch auf die Zugabe eines Kettenverlängerungsmittels verzichtet werden, so dass die Kettenverlängerung ausschließlich durch Wasser herbeigeführt wird.

Die Umsetzung mit dem Amin gemäß Schritt c) kann sowohl batchweise in einem separaten Reaktionsgefäß als auch kontinuierlich, z.B. in einer Mischdüse, erfolgen. Die kontinuierliche Umsetzung in einer Mischdüse ist bevorzugt. Als Mischdüsen lassen sich beispielsweise Glattstrahldüsen, Spaltdüsen, Ringspaltdüsen, Ringschlitzdüsen, Lochdüsen oder Gegenstrahldüsen verwenden. Bevorzugt wird eine Mischdüse verwendet, die analog der Voremulgierung in dem aus DE 195 10 651 A bekannten Strahldispergator funktioniert.

Die nach dem erfindungsgemäßen Verfahren hergestellten wässrigen Polyurethandispersionen weisen eine mittlere Teilchengröße von 25 bis 600 nm, bevorzugt von 30 bis 300 nm, besonders bevorzugt von 35 bis 250 nm, auf. Der Festkörpergehalt der Polyurethandispersionen liegt im Bereich von 30 bis 65 Gew.-%, vorzugsweise 35 bis 60 Gew.-% und besonders bevorzugt von 37 bis 50 Gew.-%.

Der wesentliche Vorteil des erfindungsgemäßen Verfahrens liegt in der kontinuierlichen Betriebsweise. Für das erfindungsgemäße Verfahren, umfassend die Schritte a) und b), wird zur Herstellung des NCO-Präpolymers nur ein Rührkessel benötigt. Die Kettenverlängerung kann in einem weiteren Kessel auch batchweise durchgeführt werden, bevorzugt jedoch wird die Kettenverlängerung kontinuierlich durchgeführt, so dass auf einen zweiten Rührkessel verzichtet werden kann. Bei einem vergleichbaren batchweisen, aus dem Stand der Technik bekannten Verfahren, bestehend aus der Herstellung des Polyurethan-präpolymers und der anschließenden Herstellung der Polyurethandispersion, werden in der Regel zwei Rührkessel benötigt (inverses Verfahren).

Das erfindungsgemäße Verfahren ist insbesondere für Polyurethandispersionen auf Basis von aromatischen Polyisocyanaten von Vorteil. Es werden hohe Festkörpergehalte von mindestens 35 Gew.% erzielt, während mit aus dem Stand der Technik bekannten diskontinuierlichen Verfahren Festkörpergehalte von maximal 30 Gew.% erreicht werden.

Bei dem erfindungsgemäßen Verfahren muss außerdem kein externer Emulgator eingesetzt werden, jedoch umfasst das erfindungsgemäße Verfahren auch solche Dispersionen, die ausschließlich oder anteilig durch Verwendung externer ionischer und/oder nichtionischer Emulgatoren des Standes der Technik hergestellt und stabilisiert werden. Ferner können alle bekannten Amine als Kettenverlängerer eingesetzt werden. Somit ist eine breitere Palette von Dispersionen auf Basis aromatischer Polyisocyanate mit sehr unterschiedlichen Eigenschaften zugänglich.

Vorteilhaft bei dem erfindungsgemäßen Verfahren ist weiterhin, dass zur Vermischung der Komponenten, z.B. des Polyurethanpräpolymers mit Wasser, und für die Homogenisierung der Voremulsion Mischdüsen, bevorzugt Strahldispergatoren, eingesetzt werden, die keine bewegbaren Bauteile aufweisen. Sie zeigen daher eine geringere Störanfälligkeit und einen geringeren Wartungsaufwand.

Vorteilhafterweise ist die Standzeit bei dem erfindungsgemäßen Verfahren gegenüber den aus dem Stand der Technik bekannten Verfahren höher. Sie liegt bei dem erfindungsgemäßen Verfahren in der Größenordnung von 10 Stunden, bevorzugt in der Größenordnung von 24 Stunden, in denen ein kontinuierlicher, störungsfreier Betrieb gewährleistet ist.

Die Erfindung wird nachfolgend anhand der Zeichnungen näher erläutert. Es zeigen:
- Figur 1: ein Fließschema des erfindungsgemäßen Verfahrens für die Dispergierung von aliphatischen Präpolymeren mit batchweiser Kettenverlängerung
- Figur 2: eine schematische Darstellung einer bevorzugten Ausführungsform der zur Herstellung der Voremulsion verwendeten Mischdüse
- Figur 3: eine schematische Darstellung einer bevorzugten Ausführungsform der zur Homogenisierung der Voremulsion verwendeten Homogenisierdüse
- Figur 4: ein Fließschema des erfindungsgemäßen Verfahrens für die Dispergierung von aromatischen Präpolymeren mit kontinuierlicher Kettenverlängerung
- Figur 5: eine schematische Darstellung einer weiteren bevorzugten Ausführungsform der zur Herstellung der Voremulsion verwendeten Mischdüse
- Figur 6: ein Fließschema einer bevorzugten Ausführungsform des erfindungsgemäßen Verfahrens für die Dispergierung von aliphatischen Präpolymeren mit kontinuierlicher Kettenverlängerung.

### Beispiele:

### Herstellung einer OH-Komponente A:

In einem 51-Reaktor mit Rückflußkühler wurden 3200 g Ricinusöl und 1600 g Sojaöl sowie 2,4 g Dibutylzinnoxid eingewogen. Ein Stickstoffstrom (51/h) wird durch die Reaktanden geleitet. Innerhalb von 140 min wird auf 240°C aufgeheizt. Nach 4 h bei 240°C wird abgekühlt. Die OH-Zahl beträgt 109 mg KOH/g, die Säurezahl 3,2 mg KOH/g.

### Vergleichsbeispiel:

339 g PolyTHF (MG 2000, BASF AG, Ludwigshafen, Deutschland), 248 g der OH-Komponente A, 70 g Dimethylolpropionsäure, 34 g Hexandiol 1,6 und 179 g N-Methylpyrrolidon wurden auf 70°C aufgeheizt und gerührt, bis eine klare Lösung entstand. Dann wurden 516 g Desmodur® W (Bayer AG, Leverkusen, Deutschland) zugegeben und auf 100°C aufgeheizt. Bei dieser Temperatur wurde gerührt, bis der NCO-Gehalt von 4,6 % erreicht war und anschließend auf 70°C abgekühlt und 37 g Triethylamin zugegeben. 500 g dieser Lösung wurden unter heftigem Rühren in 666 g Wasser, das bei einer Temperatur von 30°C vorgelegt war, dispergiert. Nach Dispergierung wurde 5 min nachgerührt. Dann wurde innerhalb von 5 min eine Lösung von 5,5 g Hydrazinhydrat und 8,8 g Ethylendiamin in 74 g Wasser zugegeben. Zur vollständigen Abreaktion der Isocyanatgruppen wurde bei 45°C gerührt, bis IR-spektroskopisch kein NCO mehr nachgewiesen werden konnte. Nach Abkühlen auf 30°C wurde durch ein Seitz T5500-Filter filtriert.

### Kenndaten der Polyurethandispersion gemäß Vergleichsbeispiel:

Mittlere Teilchengröße : 58 nm (Laserkorrelationsspektroskopie, LKS)
pH: 7,8
Festkörpergehalt: 36,0 Gew.%

### Ausführungsbeispiel 1: NCO-Präpolymer 1

339 g PolyTHF (MG 2000, BASF AG, Ludwigshafen, Deutschland), 248 g der OH-Komponente A, 70 g Dimethylolpropionsäure, 34 g 1,6-Hexandiol und 179 g N-Methylpyrrolidon wurden auf 70°C aufgeheizt und gerührt, bis eine klare Lösung entstand. Dazu wurden 516 g Desmodur® W (Bayer AG; Leverkusen, Deutschland) gegeben und auf 100°C aufgeheizt. Bei dieser Temperatur wurde gerührt, bis ein NCO-Gehalt von 4,6 % erreicht war. Schließlich wurde auf 70°C abgekühlt und 37 g Triethylamin zugegeben.

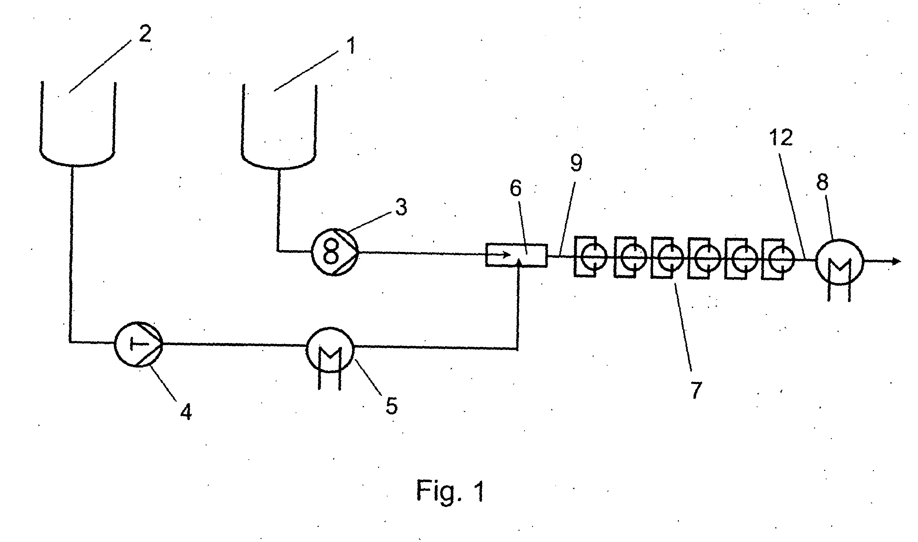

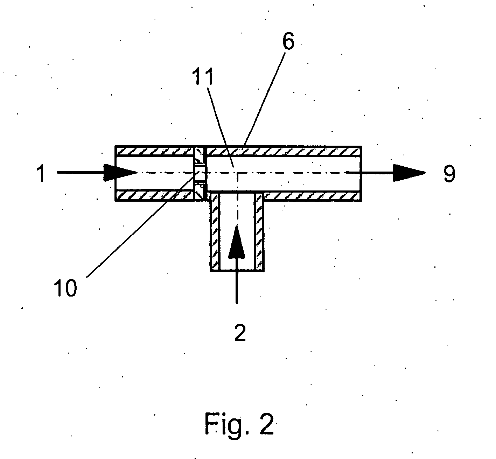

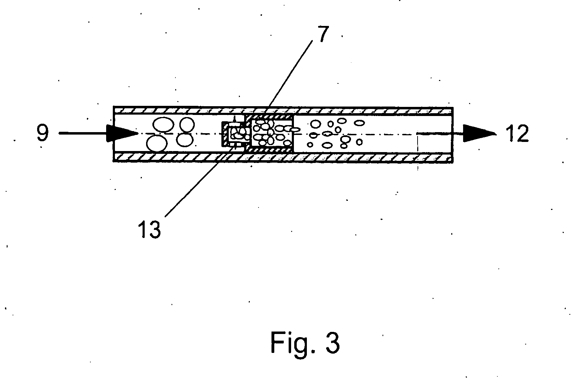

Die weitere Verarbeitung des so hergestellten Präpolymers in der Dispergieranlage erfolgt wie in Fig. 1 dargestellt: Mit der Zahnradpumpe 3 wurde das Präpolymer 1 mit einem Massenstrom von 10 kg/h in die Mischdüse 6 gefördert. Wasser 2 mit einem Massenstrom von 9 kg/h wurde mittels der Kolbenmembranpumpe 4 über den Wärmetauscher 5 in die Mischdüse 6 gefördert, die eine Bohrung 10 von 2 mm Durchmesser und eine Mischstrecke 11 von 9 mm Durchmesser und 200 mm Länge besaß (siehe Fig. 2). Die entstandene Vordispersion 9 wurde über 6 Strahldispergatoren 7 homogenisiert, die je 2 Bohrungen 13 von 0,8 mm Durchmesser hatten (siehe Fig. 3). Die Temperatur des zugeführten Präpolymers 1 betrug 84°C. Die Wassertemperatur wurde mit dem Wärmetauscher 5 zum Anfahren der Anlage auf 80°C eingestellt und dann soweit abgesenkt, dass sich im stationären Zustand eine Temperatur von 46°C hinter den Strahldispergatoren 7 ergab. Der Druckabfall über die Strahldispergatoren 7 betrug 17 bar. Die Dispersion 12 wurde im Wärmetauscher 8 auf 29°C abgekühlt. Anschließend wurde zu 2330 g der Dispersion 12 unter Rühren in einem Glasbehälter (nicht dargestellt) 176 g einer Kettenverlängerungslösung gegeben. Als Lösung des Kettenverlängerers wurde verwendet: 11 g Hydrazinhydrat und 17,6 g Ethylendiamin in 149 g Wasser. Nach Abkühlen auf 30°C wurde durch ein Seitz T5500-Filter filtriert.

### Kenndaten der Polyurethandispersion gemäß Ausführungsbeispiel 1:

Mittlere Teilchengröße : 50 nm (Laserkorrelationsspektroskopie, LKS)
pH: 8,0
Festkörpergehalt: 38,6 Gew.%

### Ausführungsbeispiel 2: NCO-Präpolymer 2

Eine Mischung aus 2309,0 g Acclaim Polyol 2200 (Molekulargewicht ca. 2000 g/mol, Bayer AG, Leverkusen, Deutschland), 276,4 g Dimethylolpropionsäure und 154,7 g Hexandiol 1,6 wurde bei 110°C für eine Stunde im Vakuum entwässert. Nach Belüften mit Stickstoff wurden 1064 ml N-Methylpyrrolidon zugesetzt und bei 70°C homogenisiert. Im Anschluss wurde die Polyolmischung auf Raumtemperatur gekühlt und innerhalb einer Stunde einer Vorlage mit 1043,0 g Desmodur® T 80 (Bayer AG, Leverkusen, Deutschland) zugeführt. Nach vollständiger Zugabe der Polyolmischung wurde bei 60°C gerührt bis ein NCO-Gehalt von 2,5 % (theoretischer NCO-Gehalt 2,5 %) erreicht war (Viskosität η= 20,6 Pa·s (23°C), D = 40 s⁻¹).

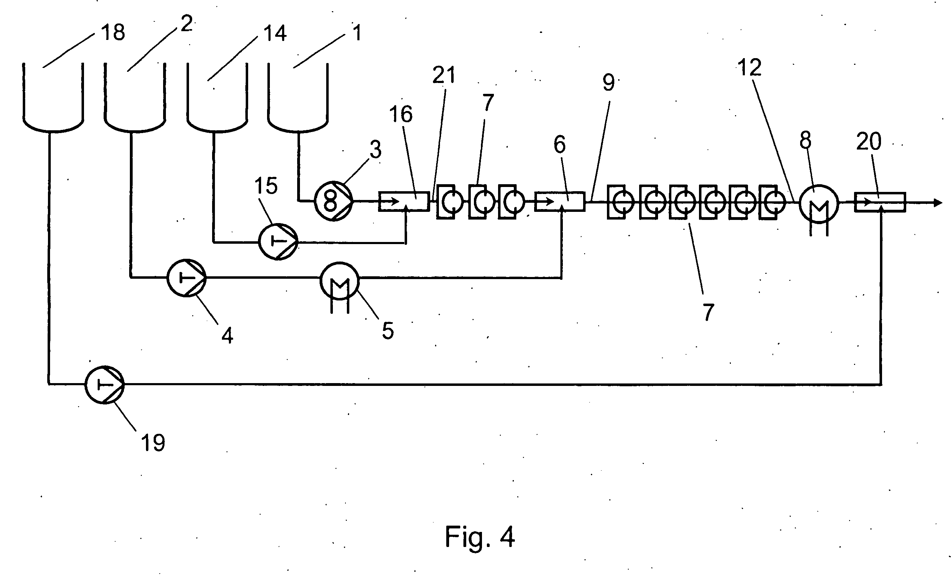

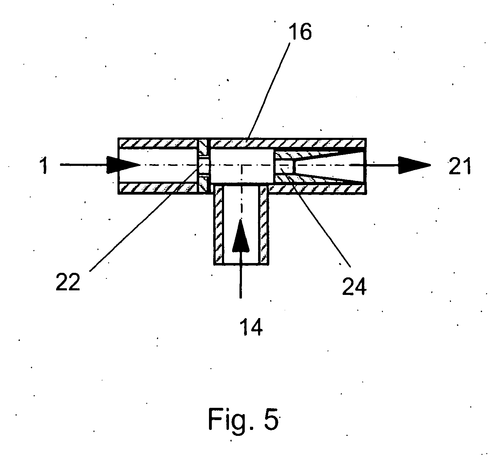

Die weitere Verarbeitung des so hergestellten Präpolymers in der Dispergieranlage erfolgt wie in Fig. 4 dargestellt: Mit der Zahnradpumpe 3 wurde das Präpolymer 1 mit einem Massenstrom von 12 kg/h in die Mischdüse 16 gefördert. Neutralisationsaminlösung 14, bestehend aus 440,6 Teilen Triethylamin und 511 Teilen N-Methylpyrrolidon, wurde mit einem Massenstrom von 1,2 kg/h über die Kolbenpumpe 15 in die Mischdüse 16 gefördert, die eine Bohrung 22 von 0,3 mm Durchmesser und eine Bohrung 24 von 4 mm Durchmesser besaß (siehe Fig. 5). Das Gemisch 21 wurde anschließend über 3 Strahldispergatoren 7 geleitet, die je 4 Bohrungen 13 von 2,1 mm Durchmesser hatten (analog Fig. 3). Das Gemisch wurde anschließend in die Mischdüse 6 geleitet. Wasser 2 mit einem Massenstrom von 15 kg/h wurde mittels der Kolbenmembranpumpe 4 über den Wärmetauscher 5 in die Mischdüse 6 gefördert, die eine Bohrung 10 von 2 mm Durchmesser und eine Mischstrecke 11 von 9 mm Durchmesser und 200 mm Länge besaß (siehe Fig. 2). Die entstandene Voremulsion 9 wurde über 6 Stralildispergatoren 7 homogenisiert, die je 4 Bohrungen 13 von 1,2 mm Durchmesser hatten (siehe Fig. 3). Die Temperatur des zugeführten Präpolymers 1 betrug 33°C. Die Wassertemperatur wurde mit dem Wärmetauscher 5 so eingestellt, dass sich im stationären Zustand eine Temperatur von 37°C hinter den Strahldispergatoren 7 ergab. Der Druckabfall über die Strahldispergatoren 7 betrug 12 bar. Die Dispersion 12 wurde im Wärmetauscher 8 auf 23°C abgekühlt und der Mischdüse 20 zugeführt. Der Mischdüse 20 (siehe Fig. 2), die eine Bohrung 10 von 0,3 mm Durchmesser und eine Mischstrecke 11 von 9 mm Durchmesser und 100 mm Länge besaß, wurde eine Kettenverlängerungslösung 18, bestehend aus 148,9 Teilen Ethylendiamin und 1645,6 Teilen Wasser, mit einem Massenstrom von 2,0 kg/h über die Kolbenpumpe 19 zugeführt.

### Kenndaten der Polyurethandispersion gemäß Ausführungsbeispiel 2:

Mittlere Teilchengröße : 73 nm (Laserkorrelationsspektroskopie, LKS)
pH: 7,5
Festkörpergehalt: 37 %

### Ausführungsbeispiel 3: NCO-Präpolymer 3

4643 g PE 225 B (Adipinsäureesters auf Basis 1,6-Hexandiol, OHZ = 47 mg KOH/g, Bayer AG, Leverkusen, Deutschland) und 580 g Dimethylolpropionsäure wurden bei 110°C im Vakuum für eine Stunde entwässert. Die Polyolmischung wurde im Anschluss mit 1292 g N-Methylpyrrolidon versetzt und solange gerührt, bis eine klare Lösung entstand. Dann wurde auf 60°C gekühlt, bevor 3938 g Isophorondiisocyanat innerhalb von 20 Minuten zugesetzt wurden. Nach Abklingen der Exothermie wurde der Ansatz langsam auf 70°C gekühlt und 744 g 1,6 - Hexandiol wurden schnell zugesetzt. Es wurde so gekühlt, dass die Reaktionstemperatur 100°C nicht überstieg. Nachdem der NCO-Gehalt der Harzmischung 4,0 % erreicht hatte, wurde eine vorbereitete Lösung aus 311 g N - Methylpyrrolidon und 358 g Triethylamin addiert und homogen vermischt.

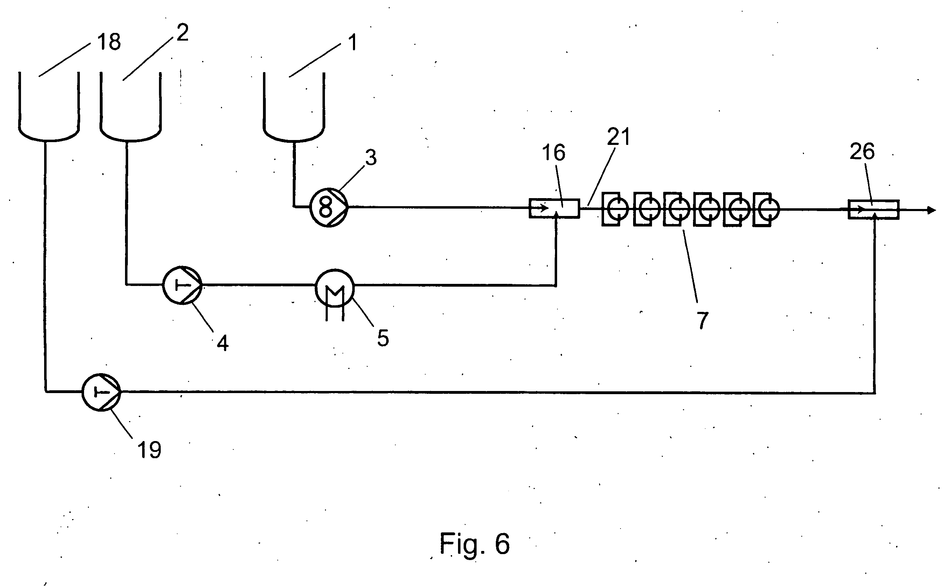

Die weitere Verarbeitung des so hergestellten Präpolymers in der Dispergieranlage erfolgt wie in Fig. 6 dargestellt: Mit der Zahnradpumpe 3 wurde das Präpolymer 1 mit einem Massenstrom von 12 kg/h in die Mischdüse 16 gefördert. Wasser 2 mit einem Massenstrom von 12 kg/h wurde mittels der Kolbenmembranpumpe 4 über den Wärmetauscher 5 in die Mischdüse 16 gefördert, die eine Bohrung 22 von 1,8 mm Durchmesser und eine Bohrung 24 von 2,2 mm Durchmesser besaß (analog Figur 5). Die entstandene Vordispersion 21 wurde über 6 Strahldispergatoren 7 homogenisiert, die je 4 Bohrungen von 1,2 mm Durchmesser hatten (siehe Fig. 3). Die Temperatur des zugeführten Präpolymers 1 betrug 80°C. Die Wassertemperatur wurde mit dem Wärmetauscher 5 zum Anfahren der Anlage auf 80°C eingestellt und dann soweit abgesenkt, dass sich im stationären Zustand eine Temperatur von 55°C hinter den Strahldispergatoren 7 ergab. Der Druckabfall über die Strahldispergatoren 7 betrug 10 bar. Die Dispersion wurde der Mischdüse 26 zugeführt. Der Mischdüse 26 (analog Fig. 5), die eine Bohrung 22 von 0,3 mm Durchmesser und eine Bohrung 24 von 2,2 mm Durchmesser besaß, wurde eine Kettenverlängerungslösung 18, bestehend aus 168 Teilen Ethylendiamin und 1346 Teilen Wasser, mit einem Massenstrom von 1,5 kg/h mittels einer Kolbenmembranpumpe 19 zugeführt. Mittels einer Blende von 0,6 mm Durchmesser wurde dem Prozess hinter der Mischdüse 26 ein Gegendruck von 6 bar aufgeprägt.

### Kenndaten der Polyurethandispersion gemäß Ausführungsbeispiel 3:

Mittlere Teilchengröße : 54 nm (Laserkorrelationsspektroskopie, LKS)
pH: 7,2
Festkörpergehalt: 40 %

## Patentansprüche

1. Verfahren zur kontinuierlichen Herstellung einer wässrigen Polyurethandispersion, auf Basis wenigstens eines aliphatischen und/oder aromatischen Polyisocyanats, **gekennzeichnet durch** die folgenden Schritte:
a) Herstellung einer wässrigen Voremulsion **durch** Vermischen eines hydrophile und/oder potenziell hydrophile Gruppen enthaltenden Polyurethanpräpolymers mit Wasser in einer Mischdüse, wobei das Polyurethanpräpolymer in das Wasser eingedüst wird
b) Bildung einer Emulsion **durch** Homogenisierung der Voremulsion aus Schritt a) in einer mehrstufigen Homogenisierdüse.

2. Verfahren nach Anspruch 1, **dadurch gekennzeichnet, dass** in einem weiteren Schritt c) wenigstens teilweise eine Umsetzung der freie NCO-Gruppen enthaltenden Emulsion aus Schritt b) mit wenigstens einem gegenüber Isocyanatgruppen reaktiven Amin erfolgt.

3. Verfahren nach Anspruch 2, **dadurch gekennzeichnet, dass** die Umsetzung mit einem Amin gemäß Schritt c) kontinuierlich in einer Mischdüse erfolgt.

4. Verfahren nach einem der Ansprüche 1-3, **dadurch gekennzeichnet, dass** die Herstellung der Voremulsion gemäß Schritt a) bei einer. Druckdifferenz von 0,1 bis 100 bar, vorzugsweise von 0,2 bis 50 bar, besonders bevorzugt von 0,5 bis 20 bar, erfolgt.

5. Verfahren nach einem der Ansprüche 1-4, **dadurch gekennzeichnet, dass** die Bildung der Emulsion gemäß Schritt b) bei einer Druckdifferenz von 1 bis 200 bar, vorzugsweise von 3 bis 100 bar, besonders bevorzugt von 5 bis 60 bar, erfolgt.

6. Verfahren nach einem der Ansprüche 1-5, **dadurch gekennzeichnet, dass** für die Homogenisierung gemäß Schritt b) 2 bis 20 Stufen eingesetzt werden.

7. Verfahren nach einem der Ansprüche 1-6, **dadurch gekennzeichnet, dass** als Homogenisierdüse in Schritt b) ein Strahldispergator eingesetzt wird.

8. Verfahren nach einem der Ansprüche 1-7, **dadurch gekennzeichnet, dass** in Schritt a) die Temperatur des Polyurethanpräpolymers 10°C bis 100°C beträgt.

9. Verfahren nach einem der Ansprüche 1-8, **dadurch gekennzeichnet, dass** in Schritt a) die Temperatur des Wassers 5°C bis 95°C beträgt.

10. Verfahren nach einem der Ansprüche 1-9, **dadurch gekennzeichnet, dass** als Mischdüse in Schritt a) ein Strahldispergator eingesetzt wird.

## Claims

1. Process for the continuous preparation of an aqueous polyurethane dispersion based on at least one aliphatic and/or aromatic polyisocyanate, **characterized by** the following steps:
a) production of an aqueous preemulsion by mixing of a polyurethane prepolymer containing hydrophilic and/or potentially hydrophilic groups with water in a mixing nozzle, with the polyurethane prepolymer being injected into the water,
b) formation of an emulsion by homogenization of the preemulsion from step a) in a multistage homogenizing nozzle.

2. Process according to Claim 1, **characterized in that** a reaction of the emulsion containing free NCO groups from step b) with at least one amine which is reactive toward isocyanate groups is carried out at least partly in a further step c).

3. Process according to Claim 2, **characterized in that** the reaction with an amine according to step c) is carried out continuously in a mixing nozzle.

4. Process according to any of Claims 1-3, **characterized in that** the production of the preemulsion according to step a) is carried out at a differential pressure of from 0.1 to 100 bar, preferably from 0.2 to 50 bar, particularly preferably from 0.5 to 20 bar.

5. Process according to any of Claims 1-4, **characterized in that** the formation of the emulsion according to step b) is carried out at a differential pressure of from 1 to 200 bar, preferably from 3 to 100 bar, particularly preferably from 5 to 60 bar.

6. Process according to any of Claims 1-5, **characterized in that** from 2 to 20 stages are used for the homogenization according to step b).

7. Process according to any of Claims 1-6, **characterized in that** a jet disperser is used as homogenizing nozzle in step b).

8. Process according to any of Claims 1-7, **characterized in that** the temperature of the polyurethane prepolymer in step a) is from 10°C to 100 °C.

9. Process according to any of Claims 1-8, **characterized in that** the temperature of the water in step a) is from 5 °C to 95 °C.

10. Process according to any of Claims 1-9, **characterized in that** a jet disperser is used as mixing nozzle in step a).

## Revendications

1. Procédé pour la préparation continue d'une dispersion aqueuse de polyuréthane, à base d'au moins un polyisocyanate aliphatique et/ou aromatique, **caractérisé par** les étapes suivantes :
a) préparation d'une pré-émulsion aqueuse par mélange d'un prépolymère polyuréthane contenant des groupes hydrophiles et/ou potentiellement hydrophiles avec de l'eau dans une buse de mélange, le prépolymère polyuréthane étant injecté dans l'eau
b) formation d'une émulsion par homogénéisation de la pré-émulsion provenant de l'étape a) dans une buse d'homogénéisation à plusieurs étages.

2. Procédé selon la revendication 1, **caractérisé en ce que** dans une autre étape c) s'effectue au moins une réaction de l'émulsion contenant des groupes NCO libres, provenant de l'étape b), avec au moins une amine réactive vis-à-vis de groupes isocyanate.

3. Procédé selon la revendication 2, **caractérisé en ce que** la réaction avec une amine selon l'étape c) s'effectue en continu dans une buse de mélange.

4. Procédé selon l'une quelconque des revendications 1 à 3, **caractérisé en ce que** la préparation de la pré-émulsion selon l'étape a) s'effectue à une différence de pression de 0,1 à 100 bars, de préférence de 0,2 à 50 bars, de façon particulièrement préférée de 0,5 à 20 bars.

5. Procédé selon l'une quelconque des revendications 1 à 4, **caractérisé en ce que** la formation de l'émulsion selon l'étape b) s'effectue à une différence de pression de 1 à 200 bars, de préférence de 3 à 100 bars, de façon particulièrement préférée de 5 à 60 bars.

6. Procédé selon l'une quelconque des revendications 1 à 5, **caractérisé en ce que** pour l'homogénéisation selon l'étape b) on utilise 2 à 20 étages.

7. Procédé selon l'une quelconque des revendications 1 à 6, **caractérisé en ce que** dans l'étape b) on utilise comme buse d'homogénéisation un appareil de dispersion à jet.

8. Procédé selon l'une quelconque des revendications 1 à 7, **caractérisé en ce que** dans l'étape a) la température du prépolymère polyuréthane est de 10 °C à 100 °C.

9. Procédé selon l'une quelconque des revendications 1 à 8, **caractérisé en ce que** dans l'étape a) la température de l'eau est de 5 °C à 95 °C.

10. Procédé selon l'une quelconque des revendications 1 à 9, **caractérisé en ce que** dans l'étape a) on utilise comme buse de mélange un appareil de dispersion à jet.
